# EUROPEAN PATENT APPLICATION

(11) **EP 4 789 536 A1**
(43) Date of publication of application: **12.08.2026**
(21) Application number: 25156792.1
(22) Date of filing: 10.02.2025
(51) Int. Cl.: A01K 31/00, B32B 13/02, B32B 27/30

(54) **BAT BOX**

(71) Applicant: Unitura B.V., 7461 JR Rijssen (NL)
(72) Inventor: Jansen, Sicco, 7462 PB Rijssen (NL)
(74) Representative: 't Jong, Bastiaan Jacob

(57) **Abstract**

The invention relates to a bat box for housing bats, which bat box comprises an enclosure having a front wall, a back wall arranged parallel and at a distance of the front wall and a surrounding wall arranged along the periphery of the front wall and extending towards the back wall;
wherein an access opening is arranged adjacent to the periphery of the front wall;
wherein the front wall, surrounding wall and preferably back wall are composed out of sandwich panels, which sandwich panels comprise a core layer of extruded polystyrene and outer, glass fiber reinforced mortar layers.

## Description

The invention relates to a bat box for housing bats, which bat box comprises an enclosure having a front wall, a back wall arranged parallel and at a distance of the front wall and a surrounding wall arranged along the periphery of the front wall and extending towards the back wall;
wherein an access opening is arranged adjacent to the periphery of the front wall.

Bat boxes are known in two major types: Bat boxes which can be mounted to an exterior wall and bat boxes, which are integrated into a cavity wall. The integrated bat boxes are typically made out of wood concrete, which is a relative heavy material and has a relative high thermal conductivity.

Due to the weight, the bat boxes are difficult to handle, while the relative high thermal conductivity causes a heat leak in the cavity wall relative to the isolation material typically present in a cavity wall.

Bat boxes, which are mounted to an exterior wall, are typically made of wood. These are not very durable and need to be renewed after a few years. Due to legislation with regard to housing of bats, exchange of such bat boxes is not without substantial hassle.

It is an object of the invention to reduce the above mentioned disadvantages.

This object is achieved with a bat box according to the preamble, which bat box is characterized in that the front wall, surrounding wall and preferably the back wall are composed out of sandwich panels, which sandwich panels comprise a core layer of extruded polystyrene and outer, glass fiber reinforced mortar layers.

The sandwich panels have low weight and low thermal conductivity compared to wood concrete due to the extruded polystyrene core layer. The outer, glass fiber reinforced mortar layers provide a hard surface and therefore protection against wear from both the outside, as well as the inside, where the bats will house.

The outer, glass fiber reinforced mortar layers also provides a solid base for attaching for example stone strips.

The access opening can be either arranged in the front wall or in the surrounding wall. An access opening in the front wall is typically used when the bat box is partially or fully integrated into a wall, while the access opening is provided in the surrounding when the bat box is mounted on the outside of an exterior wall.

In a preferred embodiment of the bat box according to the invention at least part of the surrounding wall and either the front wall or the back wall are formed from a single sandwich panel, being provided with at least one V-shaped groove extending through one of the glass fiber reinforced mortar layers and the core layer, along which at least one V-shaped groove the sandwich panel is folded, preferably over an angle of 90°.

The advantage of the used sandwich panel is that it can easily be folded by providing a V-shaped groove to provide upstanding walls to a sandwich panel. By providing some adhesive in the V-shaped groove, the folded part can also be kept together without the need of nails, screws or other fasteners.

Typically, the space between the front wall and the back wall is less than 120mm. This is sufficient space for bats to be housed in a bat box according to the invention. It furthermore allows for a bat box to be fully positioned within the cavity of a cavity wall.

A further preferred embodiment of a bat box according to the invention, further comprises a wooden framework, wherein the front wall is arranged to one side of the framework and the back wall is arranged to the opposite side of the framework.

The wooden framework provides a frame to which the walls can be attached with for example staples. The framework will be shielded from outside influences, such as moist, by the sandwich panels forming the walls of the bat box. The wooden framework also allows for arranging guide elements near the access opening, guiding bats towards the access opening.

Yet another embodiment of the bat box according to the invention further has a partition wall arranged parallel to and between the front wall and back wall, which partition wall has a central opening for bats moving from one side of the partition wall to the opposite side.

In a preferred embodiment of the bat box according to the invention, the partition wall is a sandwich panel comprising a core layer of extruded polystyrene and outer, glass fiber reinforced mortar layers. This also ensures a low weight and the outer layers provide a solid surface, which cannot be damaged by bats.

In yet another preferred embodiment of the bat box according to the invention, having a partition wall, the partition wall is provided with at least one tab arranged at the periphery of the partition wall and wherein the wooden framework is provided with at least one corresponding recess to accommodate the at least one tab.

The at least one tab allows for easy positioning of the partition wall within the wooden framework, when assembling the bat box according to the invention and arranging the walls to the wooden framework.

In another embodiment of the bat box according to the invention the access opening is arranged in the front wall and an entry stone is arranged in the access opening. This entry stone can for example be integrated into the outer brick layer of a cavity wall.

In still another embodiment of the bat box according to the invention the outer surface of the bat box is coated with paint, plaster or spray cork.

The outer, glass fiber reinforced mortar layers are very suited for a coating with paint, plaster or spray cork. The coating provides a nice finish, which may be part of the outer brick layer.

The invention further relates to a combination of an exterior wall of a building and a bat box according to any of the preceding claims, wherein the bat box is mounted against the exterior wall and wherein the back wall of the bat box is formed by the exterior wall.

As the bat box is mounted to an exterior wall the bat box would not necessarily need a back wall and is thus according to the invention formed by the exterior wall.

These and other features of the invention will be elucidated in conjunction with the accompanying drawings.
Figures 1A - 1C show the steps of folding a sandwich panel used for a bat box according to the invention.
Figure 2 shows an exploded view of parts of an embodiment of a bat box according to the invention.
Figure 3 shows additional parts of the embodiment of figure 2.
Figure 4 shows a perspective view of the completed embodiment of figures 2 and 3.
Figure 5 shows a cross-sectional view of an embodiment of combination according to the invention.

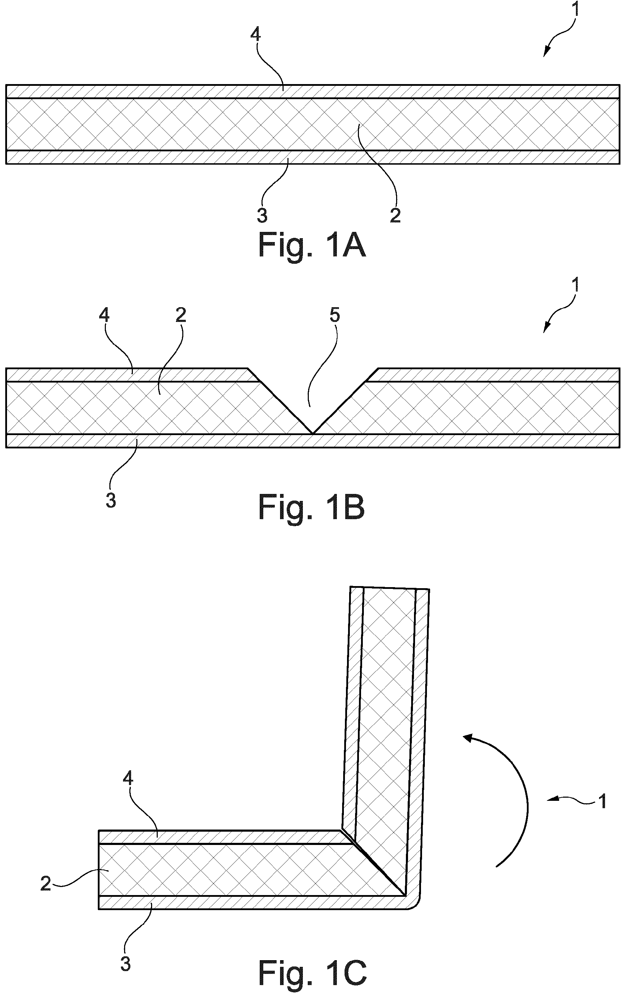

Figure 1A shows a cross-section of a sandwich panel 1 having a core layer 2 of extruded polystyrene and two outer, glass fiber reinforced mortar layers 3, 4.

In figure 1B a V-shaped groove 5 has been provided into the sandwich panel 1 of figure 1A. This V-shaped groove 5 extends through the outer, glass fiber reinforced mortar layer 4 and the extruded polystyrene core layer 6. The other outer, glass fiber reinforced mortar layer 3 remains intact.

In figure 1C, the sandwich panel 1 has been folded along the V-shaped groove 5, such that a bend in the sandwich panel 1 with an angle of 90° is provided. In this way, a sandwich panel 1 can be provided with upstanding walls and for example provide a front wall with at least part of a surrounding wall.

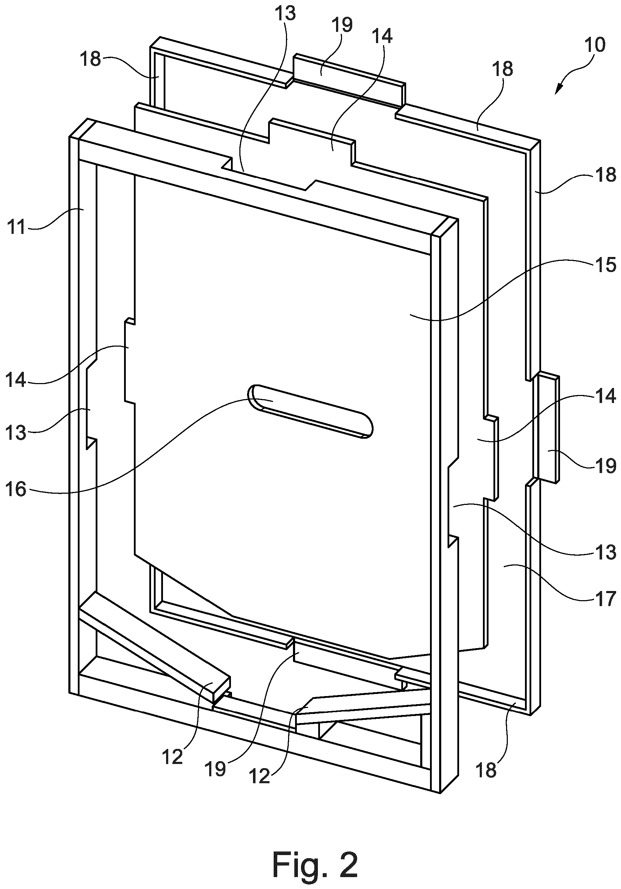

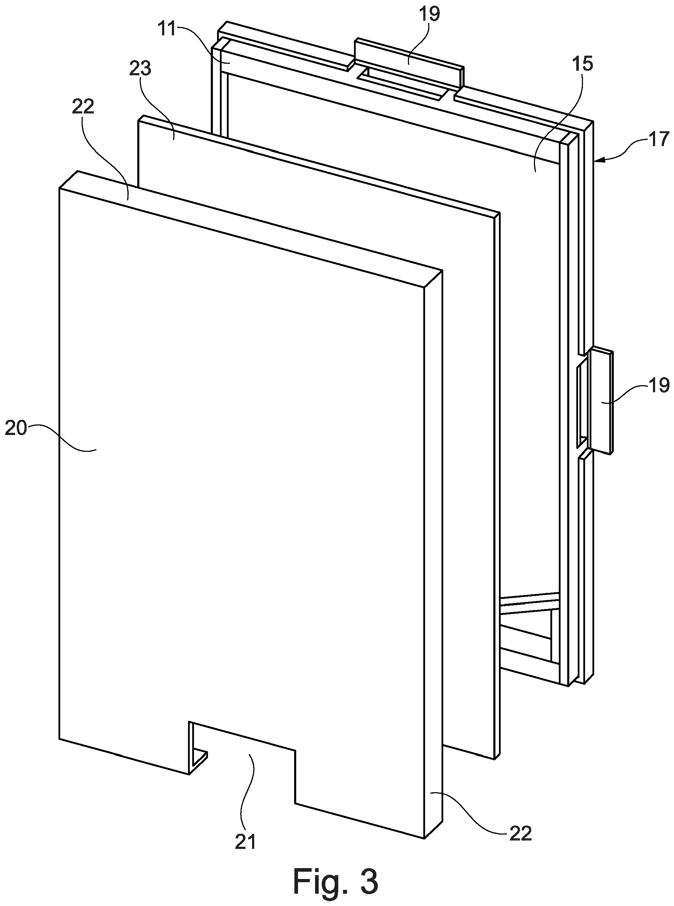

Figure 2 shows an exploded view of an embodiment of a bat box 10 according to the invention. The bat box 10 has a wooden framework 11 with at the bottom two guide elements 12, which will border the access opening in the front wall (see figure 3).

At both sides and the top of the wooden framework 11, recesses 13 are provided, which accommodate the tabs 14 arranged on the partition wall 15. A central opening 16 is provided at the partition wall 15, such that bats can move from one side of the partition wall 15 to the other side.

A back wall 17 is furthermore provided. This back wall 17 is provided with surrounding walls 18 by bending the sandwich panel as disclosed in figures 1A - 1C. Flaps 19 are provided at each side of the back wall 17.

Figure 3 shows the parts shown in figure 2 assembled and furthermore a front wall 20 with an access opening 21 and surrounding walls 22. A reinforcing panel 23 is positioned between the front wall 20 and the wooden framework 11.

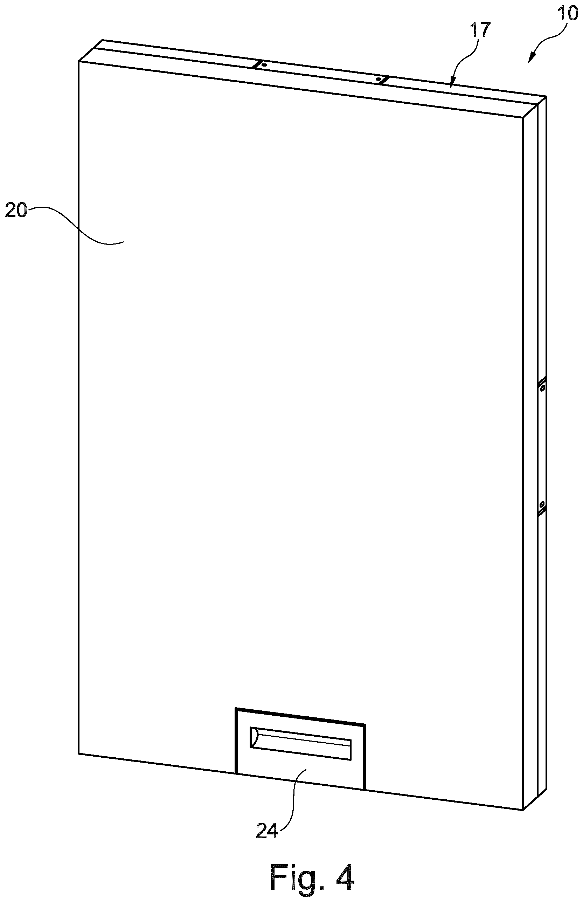

Figure 4 shows the embodiment 10 of the bat box according to the invention. The front wall 20 is mounted on the wooden framework, such that a closed housing is provided. An entry stone 24, suited for bats, is inserted into the access opening 21. In the shown embodiment 10 the entry stone 24 is flush with the front wall 20 and accordingly to be integrated visibly in a brick wall. By using an entry stone of larger depth, the bat box according to the invention can also be positioned in the cavity of a cavity wall, while the entry stone is only visible in the brick wall.

Each of the partition wall 15, back wall 17, front wall 20 and reinforcing panel 23 are in this embodiment made from sandwich panel as disclosed in figure 1A.

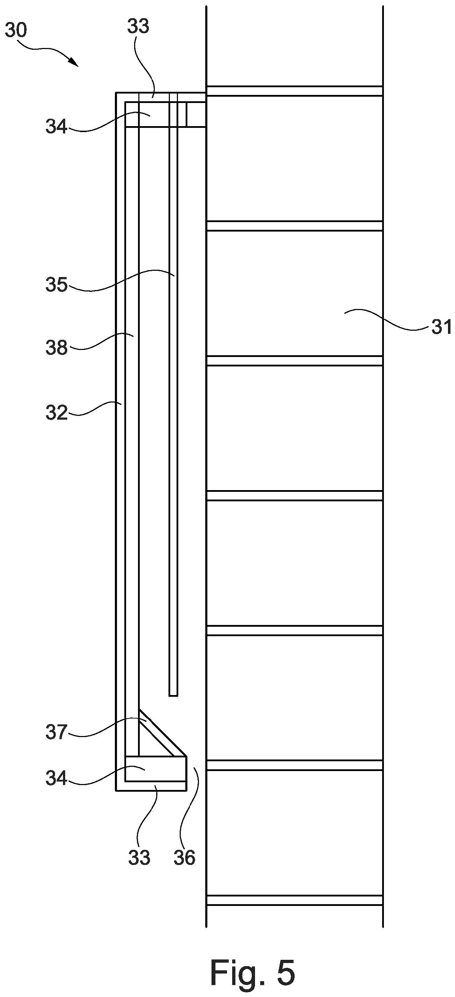

Figure 5 shows a cross-sectional view of an embodiment 30 of combination according to the invention. The embodiment 30 has an external brick wall 31 and a bat box having a front wall 32 and surrounding wall 33. The front wall 32 and surrounding wall 33 are enveloping a wooden framework 34, in which a partition wall 35 is provided.

An access opening 36 is provided at the bottom in the surrounding wall 33. A guide element 37 is furthermore arranged near the access opening 36 to guide bats between the interior of the bat box and the access opening 36.

A reinforcing panel 38 is provided on the inside of the front wall 32 to reinforce the front of the bat box.

At least the front wall 32 and surrounding wall 33 are composed out of sandwich panels, which sandwich panels comprise a core layer of extruded polystyrene and outer, glass fiber reinforced mortar layers. This allows for coating these front walls 32 and surrounding wall 33 with a desired layer to improve the appearance of the bat box.

## Claims

1. Bat box for housing bats, which bat box comprises an enclosure having a front wall, a back wall arranged parallel and at a distance of the front wall and a surrounding wall arranged along the periphery of the front wall and extending towards the back wall;
wherein an access opening is arranged adjacent to the periphery of the front wall;
**characterized in that**
the front wall, surrounding wall and preferably the back wall are composed out of sandwich panels, which sandwich panels comprise a core layer of extruded polystyrene and outer, glass fiber reinforced mortar layers.

2. Bat box according to claim 1, wherein at least part of the surrounding wall and either the front wall or the back wall are formed from a single sandwich panel, being provided with at least one V-shaped groove extending through one of the glass fiber reinforced mortar layers and the core layer, along which at least one V-shaped groove the sandwich panel is folded, preferably over an angle of 90°.

3. Bat box according to claim 1 or 2, wherein the space between the front wall and the back wall is less than 120mm.

4. Bat box according to any of the preceding claims, further comprising a wooden framework, wherein the front wall is arranged to one side of the framework and the back wall is arranged to the opposite side of the framework.

5. Bat box according to any of the preceding claims, further having a partition wall arranged parallel to and between the front wall and back wall, which partition wall has a central opening for bats moving from one side of the partition wall to the opposite side.

6. Bat box according to claim 5, wherein the partition wall is a sandwich panel comprising a core layer of extruded polystyrene and outer, glass fiber reinforced mortar layers.

7. Bat box according to claim 4 and either claim 5 or 6, wherein the partition wall is provided with at least one tab arranged at the periphery of the partition wall and wherein the wooden framework is provided with at least one corresponding recess to accommodate the at least one tab.

8. Bat box according to any of the preceding claims, wherein the access opening is arranged in the front wall and an entry stone is arranged in the access opening.

9. Bat box according to any of the preceding claims, wherein the outer surface of the bat box is coated with paint, plaster or spray cork.

10. Combination of an exterior wall of a building and a bat box according to any of the preceding claims, wherein the bat box is mounted against the exterior wall and wherein the back wall of the bat box is formed by the exterior wall.
